(19) Europäisches Patentamt / European Patent Office / Office européen des brevets

(11) **EP 4 250 391 A1**

(12) **EUROPEAN PATENT APPLICATION**

(43) Date of publication:
**27.09.2023 Bulletin 2023/39**

(21) Application number: **22191678.6**

(22) Date of filing: **23.08.2022**

(51) International Patent Classification (IPC):
**H01M 4/131** (2010.01)   **H01M 4/485** (2010.01)
**H01M 4/48** (2010.01)   **H01M 4/62** (2006.01)
**H01M 50/209** (2021.01)   H01M 4/02 (2006.01)

(52) Cooperative Patent Classification (CPC):
**H01M 4/131; H01M 4/483; H01M 4/485;
H01M 4/625; H01M 50/209;** H01M 2004/021;
H01M 2004/027; H01M 2220/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2022 JP 2022045275**

(71) Applicant: **KABUSHIKI KAISHA TOSHIBA
Minato-ku
Tokyo
105-0023 (JP)**

(72) Inventors:
• **YAMASHITA, Yasunobu**
  **Minato-ku, Tokyo, 105-0023 (JP)**
• **YOSHIDA, Yorikazu**
  **Minato-ku, Tokyo, 105-0023 (JP)**
• **HARADA, Yasuhiro**
  **Minato-ku, Tokyo, 105-0023 (JP)**
• **TAKAMI, Norio**
  **Minato-ku, Tokyo, 105-0023 (JP)**
• **MATSUNO, Shinsuke**
  **Minato-ku, Tokyo, 105-0023 (JP)**

(74) Representative: **Hoffmann Eitle
Patent- und Rechtsanwälte PartmbB
Arabellastraße 30
81925 München (DE)**

(54) **ELECTRODE, SECONDARY BATTERY, BATTERY PACK, AND VEHICLE**

(57) In general, according to one approach, an electrode (3 or 5) including a mixture layer (3b or 5b) containing a titanium-containing oxide and a conductive agent is provided. The electrode (3 or 5) satisfies expression (1). Where, $L^*$ is a lightness of the electrode (3 or 5) according to JISZ8722:2009. Also, $r_i$ is a particle size for the mixture layer (3b or 5b) at a volume cumulative frequency dx, where i is a natural number from 1 to 9. The volume cumulative frequency dx is a volume-based cumulative frequency for which accumulation starts with a smaller particle size. The volume cumulative frequency dx takes a value from 10% to 90% in increments of 10%.

$$7.0 \leq (100 - L^*)/\sum_{1}^{9} \frac{1}{r_i} di \leq 11.0 \qquad (1)$$

**(Cont. next page)**

F I G. 10

**Description**

FIELD

This disclosure relates to an electrode, a secondary battery, a battery pack, and a vehicle.

BACKGROUND

An electrode material for secondary batteries typically experiences volume expansion and contraction due to chemical reactions caused during charge and discharge. Taking a lithium ion battery as an example, its electrode active material undergoes insertion and extraction of lithium ions so as to entail volume changes. A negative electrode material, which does not contain lithium in an uncharged state, tends to increase in volume as lithium ions are inserted into it by the charging operation. The electrode itself also shows a behavior of expanding in the thickness and plane directions in conjunction with this, and it often maintains the expanded profile even after returning to the uncharged state by the discharging operation. If the active material is constituted by insulating oxide particles, the volume expansion could incur a loss of inter-particle conduction paths. It is another concern that a crack or the like could occur in the active material particles simultaneously with the path-loss, which might result in creation of isolated primary particles within the active material particles. These events lead to a resistance increase and a capacity degradation of the battery, and measures need to be taken with respect to active material particle forms, electrode composition, etc.

Carbon materials are generally employed as a negative electrode material for a lithium ion battery. Although the volume of a highly conductive carbon material would expand due to the lithium ion insertion, it would not raise the above issues. Similarly, lithium titanate, which is a typical example of commercially available insulating oxide particles, is an active material which does not cause volume changes during charge and discharge. Thus, lithium titanate would not raise the above issues, either.

In that context, an electrode design differing from the conventional ones may be offered for the types of active materials that are insulating and also cause volume changes during charge and discharge. As one example, proposals have been made to set specific ranges for the particle size and pore size distributions for an electrode containing a niobium-titanium composite oxide as an active material so that the input-output performance and cycle performance of the battery are improved.

Meanwhile, for the optimization of battery characteristics, it is also desirable to control the composition and dispersion state of a conductive agent from the viewpoint of volume changes during charge and discharge.

BRIEF DESCRIPTION OF THE DRAWINGS

FIG. 1 is a sectional view schematically showing an exemplary secondary battery according to an approach.
FIG. 2 is an enlarged sectional view of section A of the secondary battery shown in FIG. 1.
FIG. 3 is a partially cutout perspective view schematically showing another exemplary secondary battery according to the approach.
FIG. 4 is an enlarged sectional view of section B of the secondary battery shown in FIG. 3.
FIG. 5 is a perspective view schematically showing an exemplary battery module according to the approach.
FIG. 6 is an exploded perspective view schematically showing an exemplary battery pack according to the approach.
FIG. 7 is a block diagram showing exemplary electric circuitry of the battery pack shown in FIG. 6.
FIG. 8 is a sectional view schematically showing an exemplary vehicle according to the approach.
FIG. 9 is a diagram schematically showing another exemplary vehicle according to the approach.
FIG. 10 is a diagram showing a volume frequency particle size distribution of a mixture layer of an electrode of Example 1.

DETAILED DESCRIPTION

According to one approach, an electrode which allows for the realization of low-resistance and long-life batteries, as well as a secondary battery, a battery pack, and a vehicle each including the electrode are provided.

In general, according to one approach, an electrode including a mixture layer containing a titanium-containing oxide and a conductive agent is provided. The electrode satisfies the following expression (1).

$$7.0 \leq (100 - L*)/\sum_1^9 \frac{1}{r_i} di \leq 11.0 \qquad (1)$$

In the expression (1), $L^*$ is a lightness, i.e., a color value, of the electrode measured according to JISZ8722:2009. Also, $r_i$ is a particle size for the mixture layer at a volume cumulative frequency dx, where i is a natural number from 1 to 9. The volume cumulative frequency dx is a volume-based cumulative frequency for which accumulation starts with a smaller particle size. The volume cumulative frequency dx takes a value from 10%, denoted as d10, up to 90%, denoted as d90, in increments of 10%.

According to another approach, a secondary battery is provided. The secondary battery includes a positive electrode, a negative electrode, and an electrolyte. The positive electrode or the negative electrode is the electrode according to a given approach.

According to yet another approach, a battery pack is provided. The battery pack includes the secondary battery according to a given approach.

According to still another approach, a vehicle is provided. The vehicle includes the secondary battery or the battery pack according to a given approach.

The approaches will be described below, and the drawings will be referred to as appropriate. The description will use the same reference symbols for the components or features common to the approaches, and redundant explanations will basically be omitted. Each drawing is schematic and intended to facilitate the explanation and understanding of the corresponding approaches. Shapes, sizes, ratios, etc., read from the drawings may differ from those of actual devices or the like, but they may be discretionarily subject to design changes in light of the disclosure herein and the known art.

(First Approach)

According to the first approach, an electrode including a mixture layer (which may also be called an "active material-containing layer") is provided. The mixture layer contains an active material, a conductive agent, and a binder. The active material includes a titanium-containing oxide. The electrode satisfies the following expression (1).

$$7.0 \leq (100 - L*)/\sum_1^9 \frac{1}{r_i} di \leq 11.0 \qquad (1)$$

In the expression (1), $L^*$ is a lightness of the electrode measured according to JISZ8722:2009, and $r_i$ is a particle size for the mixture layer at a volume cumulative frequency dx. Here, i is a natural number from 1 to 9. The volume cumulative frequency dx is a volume-based cumulative frequency for which accumulation starts with a smaller particle size in the mixture layer. A volume cumulative frequency of 10% is denoted as d10, and the volume cumulative frequency dx takes a value from 10% to 90% in increments of 10%. As such, the particle size at a volume cumulative frequency of 20% (d20) is denoted as r2, the particle size at a volume cumulative frequency of 30% (d30) is denoted as r3, the particle size at a volume cumulative frequency of 40% (d40) is denoted as r4, the particle size at a volume cumulative frequency of 50% (d50) is denoted as r5, the particle size at a volume cumulative frequency of 60% (d60) is denoted as r6, the particle size at a volume cumulative frequency of 70% (d70) is denoted as r7, the particle size at a volume cumulative frequency of 80% (d80) is denoted as r8, and the particle size at a volume cumulative frequency of 90% (d90) is denoted as r9.

The particle size for the mixture layer may be, for example, a particle size of active material particles, or a particle size of a composite containing one or more active material particles and the conductive agent. Examples of such a composite containing one or more active material particles and the conductive agent include the active material particle with at least part of its surface covered by the conductive agent. The active material particle may be any of a single or independent primary particle, a secondary particle formed of an aggregate of primary particles, or a combination of one or more primary particles and one or more secondary particles.

The expression (1) indicates that the relational expression, namely, [100 - electrode lightness $L^*$] to [the sum of reciprocals of particle sizes at the respective volume cumulative frequencies], falls in the range of 7.0 or greater and 11.0 or less. An electrode satisfying the expression (1) is capable of avoiding loss of conduction paths even in the event of active material volume changes due to charge and discharge, and it is also capable of suppressing the creation of isolated primary particles that results from disintegration of secondary particles. The electrode lightness $L^*$ is usable as an index of the dispersion of a conductive agent in the instances of dealing with an electrode having a constitution where, for example, a black or black-like conductive agent is added to white or white-like active material particles. A low $L^*$ value is indicative of a good dispersion of the conductive agent, and a high $L^*$ value is indicative of either a poor dispersion or an insufficient additive amount of the conductive agent. The sum of reciprocals of particle sizes at the respective volume cumulative frequencies is an index of the total specific surface area of the active material. Here, the electrode lightness is divided by the sum of reciprocals of particle sizes so as to acquire a numerical index that can correspond to the coverage by the conductive agent over the insulating active materials per unit surface area. Note that this relational expression being in the range of 7.0 to 11.0 corresponds to the state where the surfaces of the insulating active materials are covered by a sufficient amount of the conductive agent and the particle sizes of the active materials fall within a proper range. In this state, an active material secondary particle itself is not very larger than the primary particle, and therefore, even when a crack occurs in the secondary particles due to volume changes during charge and discharge, isolated primary particles are not easily produced and degradation of the battery characteristics can be suppressed. Moreover, since the electrode lightness $L^*$ is sufficiently low and the conductive agent uniformly covers the active material surfaces, good conduction paths can be formed between the active material particles, and the reduction in battery resistance can be realized.

The relational expression, [100 - electrode lightness $L^*$] to [the sum of reciprocals of particle sizes at the respective volume cumulative frequencies], being greater than 11.0 is indicative of the state where the conductive agent has been added in an excessive amount or the active material particle sizes are relatively large. The excessive additive amount of the conductive agent could incur a drop of the battery energy density due to a lowered electrode density, a drop of the input-output performance due to a lowered porosity in the electrode, or the like. The large particle sizes could incur situations where isolated particles that cannot contribute to charging or discharging are easily created at or near the center of each secondary particle due to volume changes during charge and discharge.

On the other hand, the relational expression, [100 - electrode lightness L*] to [the sum of reciprocals of particle sizes at the respective volume cumulative frequencies], being less than 7.0 is indicative of the state where the electrode lightness $L^*$ is high and the color of the electrode surface is light (relatively close to white). The light color of the electrode surface is indicative of the state where the amount of the conductive agent for covering the active material surfaces is insufficient, and the battery resistance could be easily increased here. Such a resistance increasing tendency can be seen in not only the cases of an insufficient additive amount or poor dispersion of the conductive agent, but also in the cases of very small particle sizes of active materials even when the additive amount and the dispersion are adequate and constant. In any event, the battery resistance is increased if the amount of the conductive agent for covering the active materials is insufficient with respect to the total surface area of the active materials.

Note that the above relational expression adopts, as a numerator, [100 - electrode lightness L*], not a mere [electrode lightness L*]. This is because the coverage by the conductive agent over the surface area of the active materials should be appropriately expressed in terms of a magnitude of the relational expression. With [100 - electrode lightness $L^*$] used as a numerator, the value of the relational expression when the conductive agent is poorly dispersed is small. The poor dispersion can mean that the amount of the conductive agent for covering the active material surfaces is insufficient. Meanwhile, the conductive agent for covering the active material surfaces likewise runs short when the particle sizes of the active materials are overly small, and the value of the relational expression here is also small. Supposing that the numerator of the relational expression were a mere [electrode lightness L*], the value of the relational expression when the conductive agent is poorly dispersed would be large, while the value of the relational expression when the particle sizes of the active materials are small would be small. As such, despite the fact that these cases represent highly correlated phenomena, as both lack a sufficient amount of the conductive agent for covering the active material surfaces, the values of their respective relational expressions show opposite tendencies, and this would make an appropriate quantification of the conductive agent coverage over the surfaces of the active material particles difficult. Therefore, in the present disclosure, the relational expression in which [100 - electrode lightness $L^*$] is divided by [the sum of reciprocals of particle sizes at the respective volume cumulative frequencies] is adopted as an index of the dispersion state.

Hereinafter, the electrode according to the approach will be described in detail.

This electrode may be a positive electrode or a negative electrode. The electrode may serve as an electrode for a secondary battery. The electrode is applicable to any batteries containing a nonaqueous solvent and any batteries containing an aqueous solvent.

The electrode may further include a current collector in which one or more mixture layers are stacked or formed.

Examples of the titanium-containing oxide include a monoclinic niobium-titanium composite oxide and an orthorhombic titanium-containing composite oxide. One, two, or even more types of titanium-containing oxides may be used together. Each of such monoclinic niobium-titanium composite oxides and orthorhombic titanium-containing composite oxides may take the form of white-color insulating oxide particles.

Concrete examples of the monoclinic niobium-titanium composite oxides include $Nb_2TiO_7$, $Nb_2Ti_2O_9$,

$Nb_{10}Ti_2O_{29}$, $Nb_{14}TiO_{37}$, and $Nb_{24}TiO_{62}$. Each monoclinic niobium-titanium composite oxide may be a substituted niobium-titanium composite oxide whose Nb and/or Ti are at least partially substituted with a hetero element or elements. Such substitution elements are, for example, Na, K, Ca, Co, Ni, Si, P, V, Cr, Mo, Ta, Zr, Mn, Fe, Mg, B, Pb, Al, and so on. The substituted niobium-titanium composite oxide may contain one substitution element, or two or more substitution elements.

As yet another example, the monoclinic niobium-titanium composite oxide may be a compound represented by $Li_xTi_{1-y}M3_{y+z}Nb_{2-z}O_{7-\delta}$. Here, M3 is at least one selected from the group consisting of Mg, Fe, Ni, Co, W, Ta, and Mo. The indices in the composition formula are $0 \leq x < 5$, $0 \leq y < 1$, $0 \leq z < 2$, and $-0.3 \leq \delta \leq 0.3$.

Examples of the orthorhombic titanium-containing composite oxides include a compound represented by $Li_{2+a}M(I)_{2-b}Ti_{6-c}M(II)_dO_{14+\sigma}$. Here, M(I) is at least one selected from the group consisting of Sr, Ba, Ca, Mg, Na, Cs, Rb, and K. M(II) is at least one selected from the group consisting of Zr, Sn, V, Nb, Ta, Mo, W, Y, Fe, Co, Cr, Mn, Ni, and Al. The indices in the composition formula are $0 \leq a \leq 6$, $0 \leq b < 2$, $0 \leq c < 6$, $0 \leq d < 6$, and $-0.5 \leq \sigma \leq 0.5$. Concrete examples of the orthorhombic titanium-containing composite oxide include $Li_{2+a}Na_2Ti_6O_{14}$, where $0 \leq a \leq 6$.

Preferably, the average particle size (D50) of the active materials is in the range of 0.1 μm or larger and 10 μm or smaller. This range can provide good battery characteristics which hardly suffer from the influence of capacity degradation and battery resistance increase due to a crack in the active material particles while exhibiting a high lithium diffusivity. A more preferable range of the average particle size (D50) is 0.5 μm or larger and 3 μm or smaller, which can provide characteristics excellent in balance between the input-output performance and the life performance. If the average particle size (D50) is smaller than 0.1 μm, the surface area of the active materials is overly large, and the addition of an excessive amount of the conductive agent might be required for imparting the conductivity, or such an addition might even leave some of the particles without conductivity imparted. If the average particle size (D50) is larger than 10 μm, lithium diffuses overly long distances within the particles, which could incur degradation of the input-output performance and also both of capacity degradation and battery resistance increase due to a crack in the active material particles.

The conductive agent can enhance current collection performance and suppress the contact resistance between the active materials and the current collector. Examples of the conductive agent include carbonaceous materials, which may be a carbon black (such as an acetylene black), graphite, vapor grown carbon fiber (VGCF), a single-walled carbon nanotube, and a multi-walled carbon nanotube. Each of these may be independently used as the conductive agent, or two or more of them may be combined for use as the conductive agent. The conductive agent may or may not be integrated with the surfaces of the active material particles. A preferred conductive agent contains at least one type of nanotubes, i.e., single-walled carbon nanotubes, multi-walled carbon nanotubes, or both. Such a conductive agent is capable of uniformly imparting conductivity to even the surfaces of the active materials having relatively small particle sizes. The single-walled carbon nanotubes and the multi-walled carbon nanotubes may each be set to an average fiber diameter in the range of 1 nm or larger and 30 nm or smaller, and an average fiber length in the range of 2 μm or longer and 50 μm or shorter. The carbon nanotubes having these ranges of the average fiber diameter and the average fiber length can form good conduction paths on the surfaces of insulating active material particles. If the average fiber diameter is smaller than 1 nm, aggregates are easily produced and dispersion stability is difficult to secure, which would result in a poor processing workability. If the average fiber diameter is larger than 30 nm, an excessive additive amount would be required to form the conduction paths on the surfaces of the active materials. Also, the average fiber length being shorter than 2 μm would hamper the formation of long conduction paths, and the average fiber length being longer than 50 μm would decrease the fluidity of a coating liquid, and therefore, degrade the coating performance, which would result in a poor processing workability.

The binder is added to fill gaps created in the dispersed active material or materials so that the active material(s) and the current collector are bound together. Examples of the binder include polytetrafluoro ethylene (PTFE), polyvinylidene fluoride (PVdF), fluorine rubber, styrene-butadiene rubber (SBR), ethylene-propylene rubber, polyacrylate compounds, polyamide-imide compounds, carboxymethyl cellulose (CMC), and salts of CMC. Each of these may be independently used as the binder, or two or more of them may be combined for use as the binder. Water may be used as a solvent for the coating liquid, and in that case, addition of CMC is preferable from the viewpoint of thickening the coating liquid, stabilizing the dispersion of the active materials and the conductive agent, etc. The binder containing SBR, CMC, or both is suitable for the mass production of the electrode according to the approach.

While the mixture ratio of the active material particles, the conductive agent, and the binder in the mixture layer (the active material-containing layer) may be discretionarily changed according to uses of the electrode, exemplary mixture ratios are as follows. Preferably, the mixture layer contains the active material particles, the conductive agent, and the binder in the respective ranges of proportions of: 70 wt% or more and 96 wt% or less; 2 wt% or more and 28 wt% or less; and 2 wt% or more and 28 wt% or less. The amount of the conductive agent being 2 wt% or more can realize an enhanced current collection performance of the mixture layer. Also, the amount of the binder being 2 wt% or more provides sufficient binding between the mixture layer and the current collector, which allows for the expectation of excellent cycle performance. Turning to the other side, it is preferable to set each of the conductive agent and the binder to an amount of 28 wt% or less for the purpose of increasing the capacity.

The current collector may use materials which show electrochemical stability at the potentials where lithium (Li) insertion and extraction with the active materials take place. The potentials at which lithium is inserted into and extracted from the active materials include, for example, a potential higher than 1.0 V. In one example, when the electrode according to the approach serves as a negative electrode, the current collector is preferably made from copper, nickel, stainless steel, or aluminum, or from an aluminum alloy including one or more elements selected from the group consisting of Mg, Ti, Zn, Mn, Fe, Cu, and Si. The current collector preferably has a thickness in the range of 5 $\mu$m or more and 20 $\mu$m or less. The current collector having such a thickness can provide the electrode with a strength and a reduced weight in good balance.

A one-sided electrode including one mixture layer on the current collector that employs aluminum or an aluminum alloy as the current collector tends to be easily warped, and accordingly, when the mixture layer according to the approach is used, its effect of improving the cycle life performance can be more prominent. Note that the current collector may include a surface portion where the mixture layer is not formed. Such a portion may function as a current collecting tab.

The electrode can be produced by preparing a slurry in which the active materials, the conductive agent, and the binder as described above are dispersed in a solvent, applying this slurry onto the current collector for coating, and conducting drying and pressing steps. The pressing step is preferred since, while the resulting electrode density varies depending on a tap density of the active materials, compositions of the conductive agent in the electrode, etc., the pressing step generally endows the coated surfaces with enhanced uniformity, and increasing the electrode density by the pressing step to the extent of giving a gloss is favorable from the viewpoint of suppressing ohmic resistance components.

The dispersion step for the slurry and exemplary methods therefor will be explained. For uniformly dispersing a conductive agent over the surfaces of insulating active material particles such as titanium-containing oxides, a dispersion step for a coating liquid is required so that the aggregated conductive agent is loosened, wetted, and uniformly dispersed in the solvent and also a stable dispersion state is maintained. Especially when the conductive agent employs substances in a micro-particulate form and having a high aspect ratio, such as carbon nanotubes, the dispersion step will have a large influence over the dispersion state and the battery characteristics. In the instances of employing carbon nanotubes as the conductive agent, a method of using a dispersion liquid prepared by dispersing the carbon nanotubes in a solvent is available so that the degree of dispersion of the carbon nanotubes can be increased. Examples of a method for the dispersion here include use of means such as ultrasound or a wet-type high-pressure jet mill to loosen the carbon nanotube fiber aggregates so that uniform dispersion can be obtained. Use of a dispersant is also preferred for stabilizing the dispersion. The dispersant may be selected according to the solvent of the slurry, and examples of the dispersant for use with an aqueous solvent include carboxymethyl cellulose and polyvinyl pyrrolidone. Addition of such a dispersant or dispersants can realize a long-term maintenance of a good dispersion state.

Instead of, or in addition to, the above method of preparing the dispersion liquid, the carbon nanotubes and active materials in their powder forms can be uniformly distributed by mixing and dispersing them with high shear, or by using a medium or media to give them physical shear. The former dispersion method includes, for example, use of a dispersion mechanism, such as FILMIX (trademark), which creates stirring energy in a film-like space along the device wall with a high-speed rotating member and uses this energy for dispersion. In the dispersion by the FILMIX, it is preferable to use a mixture of powder carbon nanotubes and powder active materials rather than the single use of carbon nanotubes, since the use of the mixture enables easy disintegration of carbon nanotube aggregates themselves and consequently provides high dispersibility. The latter dispersion method includes, for example, use of spherical beads of glass, zirconia, alumina, etc., as the media added in the course of the dispersion process by a planetary centrifugal mixer. Still another example of the method for effective dispersion is use of a bead mill which feeds a coating liquid into a vessel having a rotary disk and the above medium or media in the vessel.

A description will be given of a method for measuring the electrode lightness L* and a distribution of the volume cumulative frequency particle sizes for the mixture layer.

<Measurement Method for Lightness L* of Electrode Surface>

A titanium-containing oxide may be an insulating, white-color active material. Dispersion of a conductive agent in an electrode including insulating white-color active materials and the conductive agent can be estimated through measurement of an electrode lightness according to the method described in JISZ8722:2009. It is also possible to estimate the dispersion using the slurry, but use of the electrode as a measurement subject is preferred since it allows for not only the dispersion estimation for the production process but also the dispersion estimation for a finished battery product.

Examples of a device used for the measurement include a measurement device based on spectrophotometric colorimetry, which measures reflection ratios in the respective wavelengths over the entire visible light region and calculates the tristimulus values. The calculated tristimulus values are converted into the L*a*b* color-coordinate system, and a value of the obtained lightness L$^*$ may be adopted as an index of the dispersion of the conductive agent.

<Preprocess for Samples of Lightness Measurement>

As a sample for measuring the lightness, an electrode that has not been incorporated into a battery, or an electrode that has been taken out from a disassembled battery may be used. In the case of using a sample taken out from a disassembled battery, the sample is subjected to a washing step with one or more organic solvents in order to eliminate a residual lithium salt. Here, the sample may be first immersed in a cyclic carbonate having a high lithium salt solubility, and then immersed and washed in a chain carbonate, so that the residual amount of lithium salt can be sufficiently lowered. After the immersion, pressure is reduced and the solvent is removed under vacuum.

<Method of Measuring Particle Size Distribution of Mixture Layer>

A particle size distribution of the mixture layer of the electrode can be measured by re-dissolving the mixture layer. Here, in order to avoid estimating the particle size to be larger than the actual particle size due to the presence of aggregates formed by a binder component, it is preferable to decompose and remove the binder by dissolving it in advance. More specifically, samples of the electrode are immersed in N-methyl pyrrolidone (NMP) and water as the respective solvents for 10 minutes while being subjected to ultrasound application. The mixture layer is peeled off from the current collector in each solvent, and one of the solvents that shows a larger peeling amount of the mixture layer is used for the step of re-dissolving the mixture layer. The peeling amount can be measured based on a weight change between the states of a given electrode sample before and after the dissolving. If the water solvent shows a larger peeling amount of the mixture layer, the sampling solution is subjected to a preprocess. This is from the viewpoint that, in the instances of a water solution-based slurry, the binder generally forms an emulsion and the re-dissolving in water is often difficult. The preprocess includes, for example, immersing the electrode sample having a 2 cm $\times$ 2 cm area of the mixture layer in a solution of toluene and water mixed in a volume ratio of 1:9 for 10 minutes while applying ultrasound to the electrode sample. Thereafter, the water phase present as a lower layer in the stationarily kept solution is taken out and subjected to a dispersion step again to eliminate the influence of the settling, followed by the measurement of particle size distribution.

According to the first approach described above, an electrode which includes a mixture layer containing a titanium-containing oxide, a conductive agent, and a binder, and which satisfies the expression (1) is provided. The electrode according to the approach has a proper particle size distribution of the mixture layer and a proper composition and dispersion state of the conductive agent, which can suppress the resistance increase and the capacity degradation of batteries caused due to volume changes during charge and discharge. Therefore, the electrode according to the approach can realize low-resistance and long-life batteries.

(Second Approach)

According to a second approach, a secondary battery including a negative electrode, a positive electrode, and an electrolyte is provided. This secondary battery includes, as its positive electrode or negative electrode, the electrode according to the first approach.

The secondary battery may further include a separator between the positive electrode and the negative electrode. The negative electrode, the positive electrode, and the separator may form an electrode group. The electrolyte may be retained in the electrode group. The secondary battery may further include a container member adapted to accommodate the electrode group and the electrolyte. The secondary battery may further include a negative electrode terminal electrically connected to the negative electrode, and a positive electrode terminal electrically connected to the positive electrode.

The secondary battery may be, for example, a lithium ion secondary battery. Examples of such a secondary battery include a nonaqueous electrolyte secondary battery containing one or more types of nonaqueous electrolytes.

The negative electrode, the positive electrode, the electrolyte, the separator, the container member, the negative electrode terminal, and the positive electrode terminal will be described in detail. The description will assume exemplary instances where the electrode according to the approach is employed as the negative electrode.

(1) Negative Electrode

The negative electrode included in the secondary battery according to the second approach may be, for example, the electrode described above for the first approach.

(2) Positive Electrode

The positive electrode may include a positive electrode current collector and a positive electrode mixture layer (which may also be called a "positive electrode active material-containing layer"). The positive electrode mixture layer may be formed on one surface or both surfaces of the positive electrode current collector. The positive electrode mixture layer may include a positive electrode active material and, optionally, a conductive agent and a binder.

Examples of the positive electrode active material include an oxide, a sulfide, etc. As the positive electrode active material, the positive electrode may include only one type of a compound, or may include two or more types of compounds in combination. Examples of the oxide and the sulfide include compounds capable of conducting insertion and extraction of Li and/or Li ions.

Examples of such compounds include manganese dioxide ($MnO_2$), iron oxides, copper oxides, nickel oxides, lithium-manganese composite oxides (e.g., $Li_xMn_2O_4$ or $Li_xMnO_2$; $0 < x \leq 1$), lithium-nickel composite oxides (e.g., $Li_xNiO_2$; $0 < \times \leq 1$), lithium-cobalt composite oxides (e.g., $Li_xCoO_2$; $0 < \times \leq 1$), lithium-nickel-cobalt composite oxides (e.g., $Li_xNi_{1-y}Co_yO_2$; $0 < x \leq 1$, $0 < y < 1$), lithium-manganese-cobalt composite oxides (e.g., $Li_xMn_yCo_{1-y}O_2$; $0 < x \leq 1$, $0 < y < 1$), lithium-manganese-nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y < 1$, $Li_xCoPO_4$; $0 < x \leq 1$), iron sulfates ($Fe_2(SO_4)_3$), vanadium oxides (e.g., $V_2O_5$), and lithium-nickel-cobalt-manganese composite oxides ($Li_xNi_{1-y-z}Co_yMn_zO_2$; $0 < x \leq 1$, $0 < y < 1$, $0 < z < 1$, $y + z < 1$).

Among these, examples of the compounds which are more preferable as the positive electrode active material include lithium-manganese composite oxides having a spinel structure (e.g., $Li_xMn_2O_4$; $0 < x \leq 1$), lithium-nickel composite oxides (e.g., $Li_xNiO_2$; $0 < \times \leq 1$), lithium-cobalt composite oxides (e.g., $Li_xCoO_2$; $0 < \times \leq 1$), lithium-nickel-cobalt composite oxides (e.g., $Li_xNi_{1-y}CO_yO_2$; $0 < x \leq 1$, $0 < y < 1$), lithium-manganese-nickel composite oxides having a spinel structure (e.g., $Li_xMn_{2-y}Ni_yO_4$; $0 < x \leq 1$, $0 < y < 2$), lithium-manganese-cobalt composite oxides (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium-nickel-cobalt-manganese composite oxides ($Li_xNi_{1-y-z}Co_yMn_zO_2$; $0 < x \leq 1$, $0 < y < 1$, $0 < z < 1$, $y + z < 1$). Use of one or more of these compounds as the positive electrode active material can increase the positive electrode potential.

When a room temperature ionic liquid is used as the electrolyte of the battery, use of a positive electrode active material that includes lithium iron phosphate, $Li_xVPO_4F$ ($0 \leq x \leq 1$), lithium-manganese composite oxide, lithium-nickel composite oxide, lithium-nickel-cobalt composite oxide, or any combination thereof is preferable. Since these compounds have low reactivity with room temperature ionic liquid, the cycle life can be improved. Details of the room temperature ionic liquid will be described later.

Preferably, the positive electrode active materials each have a primary particle size in the range of 100 nm or larger and 1 $\mu$m or smaller. The positive electrode active materials having a primary particle size of 100 nm or larger can be easily handled in industrial production. The positive electrode active materials having a primary particle size of 1 $\mu$m or smaller can promote smooth diffusion of lithium ions in solids.

Preferably, the positive electrode active materials have a specific surface area in the range of 0.1 $m^2$/g or more and 10 $m^2$/g or less. The positive electrode active materials having a specific surface area of 0.1 $m^2$/g or more can secure sufficient sites for insertion and extraction of Li ions. The positive electrode active materials having a specific surface area of 10 $m^2$/g or less can be easily handled in industrial production, and can secure good charge and discharge cycle performance.

The binder is added to fill gaps created in the dispersed positive electrode active material or materials and to bind the positive electrode active material(s) and the current collector together. Examples of the binder include polytetrafluoro ethylene (PTFE), polyvinylidene fluoride (PVdF), fluorine rubber, polyacrylate compounds, imide compounds, carboxymethyl cellulose (CMC), and salts of CMC. Each of these may be independently used as the binder, or two or more of them may be combined for use as the binder.

The conductive agent is added to enhance current collection performance and to suppress the contact resistance between the positive electrode active material and the positive electrode current collector. Examples of the conductive agent include carbonaceous materials, which may be vapor grown carbon fiber (VGCF), carbon black such as acetylene black, and graphite. Each of these may be independently used as the conductive agent, or two or more of them may be combined for use as the conductive agent. The conductive agent may also be omitted.

Preferably, the positive electrode mixture layer (the positive electrode active material-containing layer) contains the positive electrode active material and the binder in the respective ranges of proportions of 80 wt% or more and 98 wt% or less; and 2 wt% or more and 20 wt% or less.

The amount of the binder being 2 wt% or more can realize a sufficient electrode strength. Note that the binder may function as an insulator. Thus, the amount of the binder being 20 wt% or less leads to a reduced amount of insulators included in the electrode, and as such, less internal resistance can be realized.

In the instances where the conductive agent is added, it is preferable that the positive electrode active material, the binder, and the conductive agent be contained in the respective ranges of proportions of 77 wt% or more and 95 wt% or less; 2 wt% or more and 20 wt% or less; and 3 wt% or more and 15 wt% or less.

The amount of the conductive agent being 3 wt% or more can attain the above-described effects. The amount of the conductive agent being 15 wt% or less can provide a reduced proportion of the conductive agent that contacts the electrolyte. When this proportion is low, decomposition of the electrolyte can be suppressed during storage under high temperatures.

Preferably, the positive electrode current collector is an aluminum foil, or an aluminum alloy foil containing one or more elements selected from the group consisting of Mg, Ti, Zn, Ni, Cr, Mn, Fe, Cu, and Si.

The aluminum foil or the aluminum alloy foil preferably has a thickness in the range of 5 $\mu$m or more and 20 $\mu$m or less, and more preferably 15 $\mu$m or less. Preferably, the aluminum foil has a 99 wt% purity or higher. It is preferable that the amount of transition metal contained in the aluminum foil or the aluminum alloy foil, which may be iron, copper, nickel, and/or chromium, be 1 wt% or less.

Note that the positive electrode current collector may include a surface portion where the positive electrode mixture layer is not formed. Such a portion may function as a positive electrode current collecting tab.

The positive electrode may be produced by, for example, the following method. First, the active material, the conductive agent, and the binder are suspended in a solvent to prepare a slurry. This slurry is applied to one or both surfaces of the current collector. Then, the applied slurry is dried so that a stack of the mixture layer and the current collector is provided. The stack is subsequently subjected to a pressing step. The positive electrode is thus produced.

The following method may also be adopted to produce the positive electrode. First, a mixture of the active material, the conductive agent, and the binder is obtained. Subsequently, the mixture is shaped into pellets. The pellets are then arranged on the current collector so that the positive electrode is obtained.

(3) Electrolyte

As the electrolyte, for example, a liquid nonaqueous electrolyte or a gel nonaqueous electrolyte may be used. The liquid nonaqueous electrolyte is prepared by dissolving an electrolyte salt, i.e., a solute, in an organic solvent. Preferably, the concentration of the electrolyte salt is in the range of 0.5 mol/L or more and 2.5 mol/L or less.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide ($LiN(CF_3SO_2)_2$), and any combination thereof. The electrolyte salt is preferably resistant to oxidation even at high potentials, and the most preferable electrolyte is $LiPF_6$.

Examples of the organic solvent include: cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2MeTHF), and dioxolane (DOX); linear ethers such as dimethoxy ethane (DME) and diethoxy ethane (DEE); $\gamma$-butyrolactone (GBL); acetonitrile (AN); and sulfolane (SL). Each of these organic solvents may be used alone, or two or more of them may be used as a mixed solvent.

The gel nonaqueous electrolyte is prepared by combining a liquid nonaqueous electrolyte and a polymeric material. Examples of the polymeric material include polyvinylidene fluoride (PVdF), polyacrylonitrile (PAN), polyethylene oxide (PEO), and any combination thereof.

In addition to the liquid nonaqueous electrolyte and the gel nonaqueous electrolyte, options for the nonaqueous electrolyte also include a room temperature ionic liquid (ionic melt), a polymer solid electrolyte, an inorganic solid electrolyte, etc., each containing lithium ions.

The room temperature ionic liquid (ionic melt) refers to compounds which are, among the organic salts made of a combination of organic cations and anions, capable of being present as a liquid at ambient temperatures (15 °C to 25 °C). The room temperature ionic liquid may be a room temperature ionic liquid which by itself exists as a liquid, a room temperature ionic liquid which turns into a liquid upon being mixed with electrolyte salt, a room temperature ionic liquid which turns into a liquid upon being dissolved in an organic solvent, or any combination thereof. The room temperature ionic liquids for use in secondary batteries generally have a melting point of 25 °C or below. Also, the organic cations generally have a quaternary ammonium skeleton. (4) Separator

The separator may be made of, for example, a porous film or synthetic-resin nonwoven fabric containing polyethylene (PE), polypropylene (PP), cellulose, or polyvinylidene fluoride (PVdF). From the viewpoint of safety, use of a porous film made of polyethylene or polypropylene is preferred. Such porous films can melt at a given temperature and thus shut off the current.

(5) Container Member

As the container member, for example, a container made of a laminate film, or a metal container may be used.

The laminate film has a thickness of, for example, 0.5 mm or less, which is preferably 0.2 mm or less.

The laminate film may be a multilayer film constituted by resin layers and one or more metal layers interposed between the resin layers. The resin layers contain, for example, a polymeric material which may be polypropylene (PP), polyethylene (PE), nylon, polyethylene terephthalate (PET), etc. Preferably, the metal layer or layers are made of aluminum foil or an aluminum alloy foil for reduced weight. The laminate film may be molded into a shape of the container member by undergoing a heat sealing process.

The metal container has a wall thickness of, for example, 1 mm or less, which is more preferably 0.5 mm or less and even more preferably 0.2 mm or less.

The metal container is made of, for example, aluminum or an aluminum alloy. Preferably, the aluminum alloy contains elements such as magnesium, zinc, and/or silicon. When the aluminum alloy contains a transition metal such as iron, copper, nickel, and/or chromium, the content thereof is preferably 100 ppm by mass or less.

The container member is not limited to particular shapes. The container member may have any shape including, for example, a flat (thin) shape, a box shape, a cylindrical shape, a coin shape, and a button shape. The container member may be discretionarily selected according to the dimensions, use, etc., of the battery.

(6) Negative Electrode Terminal

The negative electrode terminal may be made of a material which is electrochemically stable at the Li insertion/extraction potentials of the negative electrode active materials, and which has an electrical conductivity. Concrete examples of the material of the negative electrode terminal include copper, nickel, stainless steel, aluminum, and an aluminum alloy containing at least one element selected from the group consisting of Mg, Ti, Zn, Mn, Fe, Cu, and Si. Preferably, aluminum or aluminum alloy is employed as the material of the negative electrode terminal. It is preferable that the negative electrode terminal be made of the same material as the negative electrode current collector so that the contact resistance between the negative electrode terminal and the negative electrode current collector is reduced.

(7) Positive Electrode Terminal

The positive electrode terminal may be made of a material which is electrically stable in the potential range of 3 V to 4.5 V (vs. Li/Li$^+$) relative to the oxidation-reduction potential of lithium, and which has an electrical conductivity. Examples of the material of the positive electrode terminal include aluminum, and an aluminum alloy containing at least one element selected from the group consisting of Mg, Ti, Zn, Mn, Fe, Cu, and Si. It is preferable that the positive electrode terminal be made of the same material as the positive electrode current collector so that the contact resistance between the positive electrode terminal and the positive electrode current collector is reduced.

Next, the secondary battery according to the approach will be described in more detail with reference to the drawings.

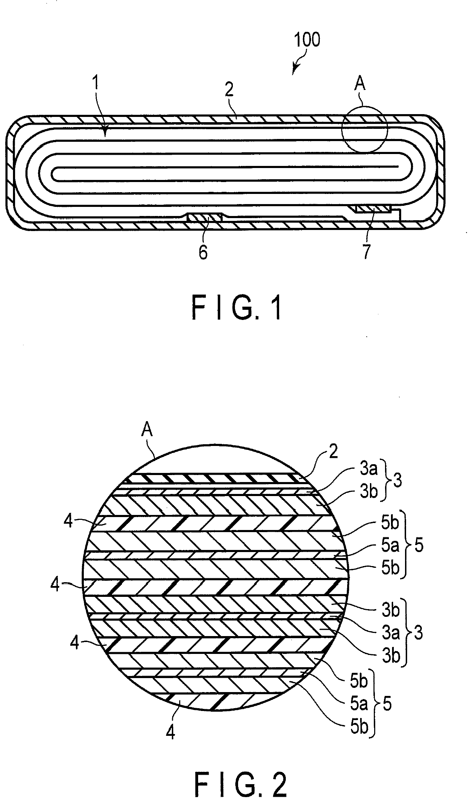

FIG. 1 is a sectional view schematically showing an example of the secondary battery according to the approach. FIG. 2 is an enlarged sectional view of section A of the secondary battery shown in FIG. 1.

A secondary battery 100 shown in FIGS. 1 and 2 includes a bag-shaped container member 2 shown in FIGS. 1 and 2, an electrode group 1 shown in FIG. 1, and a non-illustrated electrolyte. The electrode group 1 and the electrolyte are accommodated in the bag-shaped container member 2. The electrolyte (not illustrated) is retained in the electrode group 1.

The bag-shaped container member 2 is made of a laminate film constituted by two resin layers and a metal layer interposed between the resin layers.

As shown in FIG. 1, the electrode group 1 is a wound electrode group showing a flat profile. This flat wound electrode group 1 includes, as shown in FIG. 2, a negative electrode 3, a separator 4, and a positive electrode 5. The separator 4 is arranged between the negative electrode 3 and the positive electrode 5.

The negative electrode 3 includes a negative electrode current collector 3a and a negative electrode mixture layer (negative electrode active material-containing layer) 3b. As shown in FIG. 2, the portion of the negative electrode 3 that is located in the outermost part of the wound electrode group 1 has the negative electrode mixture layer 3b only on the inner surface of the negative electrode current collector 3a. For the other portions of the negative electrode 3, the negative electrode mixture layer 3b is formed on each of the two surfaces of the negative electrode current collector 3a.

The positive electrode 5 includes a positive electrode current collector 5a and a positive electrode mixture layer (positive electrode active material-containing layer) 5b formed on each of the two surfaces of the positive electrode current collector 5a.

As shown in FIG. 1, a negative electrode terminal 6 and a positive electrode terminal 7 are positioned at or near the outer peripheral end of the wound electrode group 1. The negative electrode terminal 6 is connected to an outermost portion of the negative electrode current collector 3a. Also, the positive electrode terminal 7 is connected to an outermost portion of the positive electrode current collector 5a. The negative electrode terminal 6 and the positive electrode terminal 7 are formed to extend to the outside via an opening in the bag-shaped container member 2. The bag-shaped container member 2 is provided with a thermoplastic resin layer on its inner surface so that this resin layer is subjected to a heat-sealing process to close the opening.

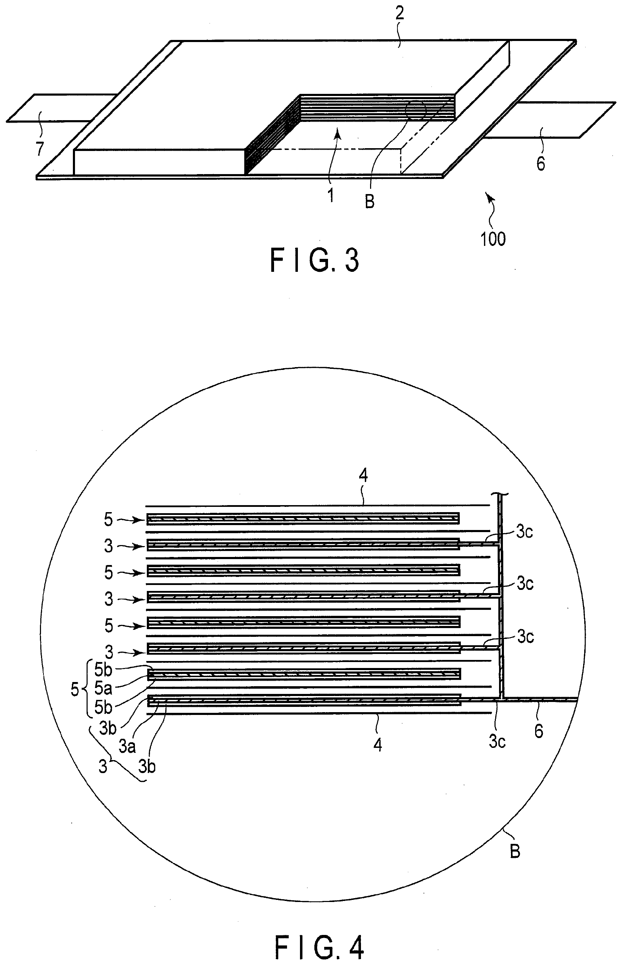

The secondary battery according to the approach is not limited to a secondary battery having a structure as shown in FIGS. 1 and 2, but it may be a battery having a different structure as shown in, for example, FIGS. 3 and 4.

FIG. 3 is a partially cutout perspective view schematically showing another example of the secondary battery according to the approach. FIG. 4 is an enlarged sectional view of section B of the secondary battery shown in FIG. 3.

A secondary battery 100 shown in FIGS. 3 and 4 includes an electrode group 1 shown in FIGS. 3 and 4, a container member 2 shown in FIG. 3, and a non-illustrated electrolyte. The electrode group 1 and the electrolyte are accommodated in the container member 2. The electrolyte is retained in the electrode group 1.

The container member 2 is made of a laminate film constituted by two resin layers and a metal layer interposed between the resin layers.

As shown in FIG. 4, the electrode group 1 is a stacked electrode group. The stacked electrode group 1 has a structure in which negative electrodes 3 and positive electrodes 5 are alternately stacked with separator(s) 4 interposed therebetween.

The electrode group 1 includes negative electrodes 3. The negative electrodes 3 each include a negative electrode current collector 3a and negative electrode mixture layers 3b supported on the respective surfaces of the negative electrode current collector 3a. The electrode group 1 also includes positive electrodes 5. The positive electrodes 5 each include a positive electrode current collector 5a and positive electrode mixture layers 5b supported on the respective surfaces of the positive electrode current collector 5a.

The negative electrode current collector 3a in each negative electrode 3 includes a portion 3c at its one side, where no negative electrode mixture layer 3b is supported on either surface. This portion 3c functions as a negative electrode current collecting tab. As shown in FIG. 4, the portion 3c functioning as a negative electrode current collecting tab does not overlap any positive electrode 5. A multiple of the negative electrode current collecting tabs (portions 3c) are electrically connected to a belt-shaped negative electrode terminal 6. The belt-shaped negative electrode terminal 6 has an end part drawn out of the container member 2.

Note that, while not illustrated, the positive electrode current collector 5a in each positive electrode 5 includes a portion at its one side where no positive electrode mixture layer 5b is supported on either surface. This portion functions as a positive electrode current collecting tab. As in the case of the negative electrode current collecting tab (the portion 3c), the positive electrode current collecting tab does not overlap any negative electrode 3. The positive electrode current collecting tab is located on the side of the electrode group 1 that is opposite to the side where each negative electrode current collecting tab (the portion 3c) is located. The positive electrode current collecting tab is electrically connected to a belt-shaped positive electrode terminal 7. The belt-shaped positive electrode terminal 7 has an end part located on the side opposite to the negative electrode terminal 6 and drawn out of the container member 2.

The secondary battery according to this approach includes the electrode according to the approach. Therefore, the secondary battery can suppress the resistance increase and also enhance the capacity retention ratio in charge and discharge cycles.

(Third Approach)

According to a third approach, a battery module is provided. This battery module includes the secondary batteries according to the approach.

The battery module according to the third approach may have an arrangement in which single batteries are electrically connected in series or in parallel, or an arrangement that employs a combination of series connections and parallel connections.

Next, an exemplary battery module according to the third approach will be described with reference to the drawings.

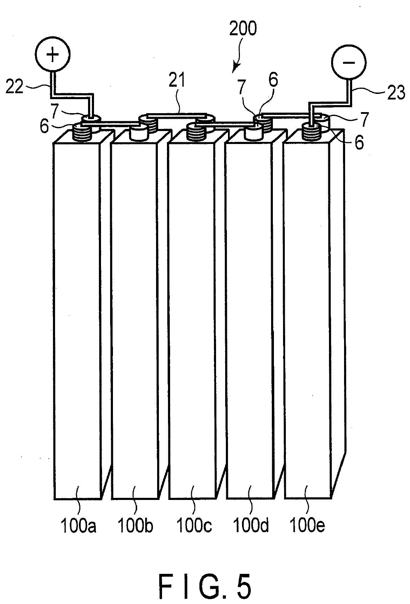

FIG. 5 is a perspective view schematically showing an example of the battery module according to the third approach. A battery module 200 shown in FIG. 5 includes five single batteries 100a to 100e, four bus bars 21, a positive electrode side lead 22, and a negative electrode side lead 23. The five single batteries 100a to 100e may each be the secondary battery according to the approach.

In one example, one bus bar 21 connects a negative electrode terminal 6 of the single battery 100a and a positive electrode terminal 7 of the next single battery 100b. In this manner, the five single batteries 100 are connected in series via the four bus bars 21. As such, the battery module 200 shown in FIG. 5 is a 5-series battery module.

As shown in FIG. 5, among the five single batteries 100a to 100e, the positive electrode terminal 7 of the leftmost single battery 100a is connected to a positive electrode side lead 22 for external connection. Also, among the five single batteries 100a to 100e, the negative electrode terminal 6 of the rightmost single battery 100e is connected to a negative electrode side lead 23 for external connection.

The battery module according to this approach includes the secondary battery according to the approach.

Therefore, the battery module can suppress the resistance increase and also exhibit excellent life performance.

(Fourth Approach)

According to a fourth approach, a battery pack is provided. This battery pack includes the battery module according to the approach. The battery pack may include the secondary batteries according to the approach, in place of the battery module according to the approach.

The battery pack according to the approach may also include a protective circuit. The protective circuit has a function of regulating the charge and discharge of the secondary batteries. Alternatively, or in addition, devices or the like (e.g., an electronic device and an automobile) that use the battery pack as their power source may include a circuit serving as a protective circuit for the battery pack.

The battery pack according to the approach may further include an external terminal for power distribution. This external power distribution terminal is adapted to output current from the secondary batteries to the outside and/or input current from the outside to the secondary batteries. In other words, for using the battery pack as a power source, current is supplied to the outside via this external power distribution terminal. Also, for charging the battery pack, charge current (including regenerative energy from automobile motive force) is supplied to the battery pack via the external power distribution terminal. Next, an exemplary battery pack according to this approach will be described with reference to the drawings.

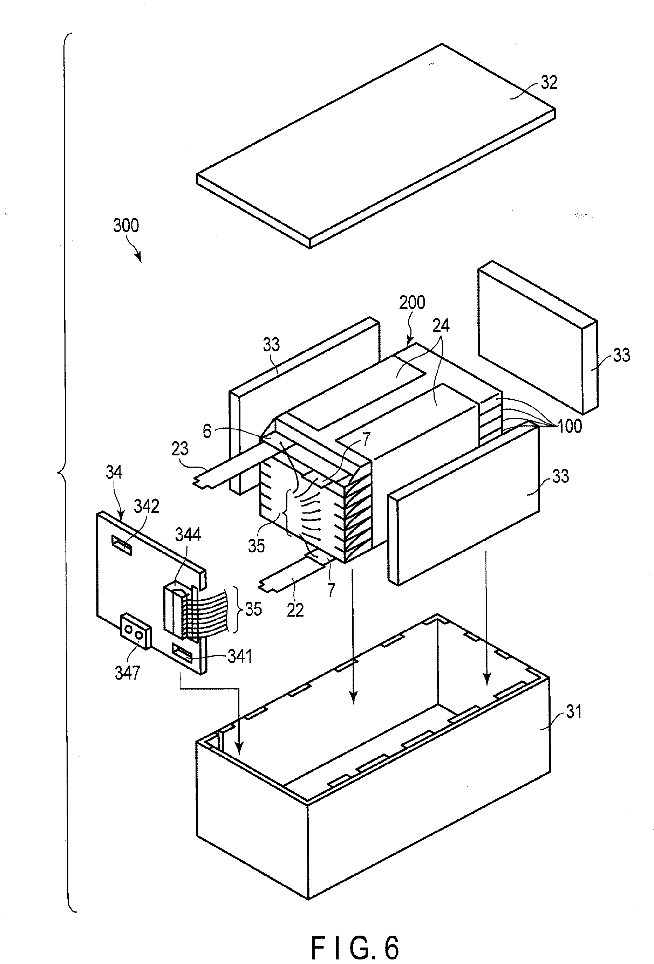

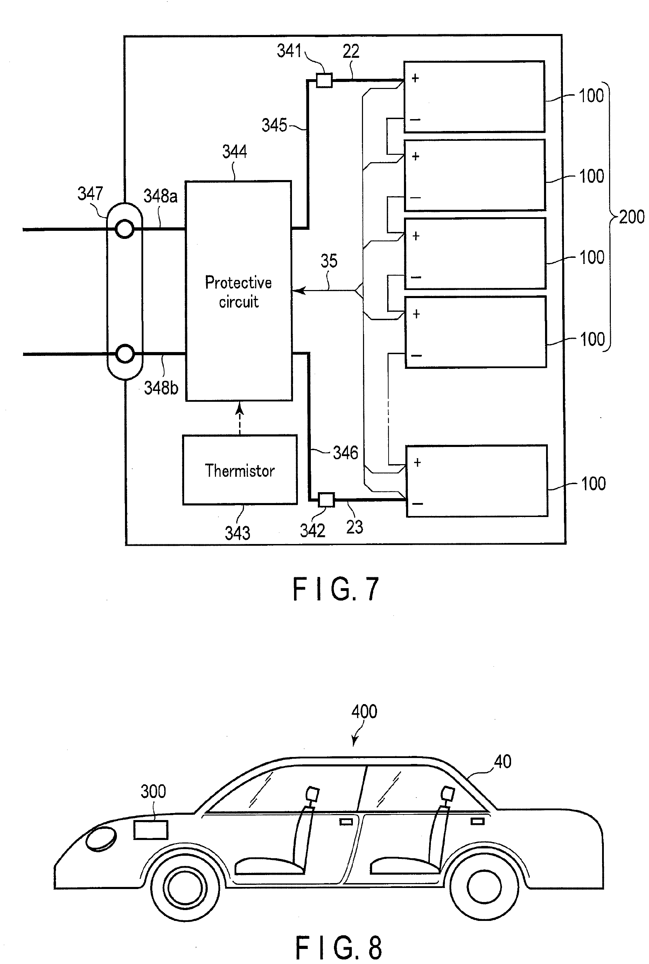

FIG. 6 is an exploded perspective view schematically showing one example of the battery pack according to the approach. FIG. 7 is a block diagram showing exemplary electric circuitry of the battery pack shown in FIG. 6.

A battery pack 300 shown in FIGS. 6 and 7 includes a housing container 31, a lid 32, protective sheets 33, a battery module 200, a printed wiring board 34, wirings 35, and a non-illustrated insulating plate.

The housing container 31 shown in FIG. 6 is a bottomed box container having a rectangular bottom surface. The housing container 31 is adapted to accommodate the protective sheets 33, the battery module 200, the printed wiring board 34, and the wirings 35. The lid 32 has a rectangular shape. The lid 32 covers the housing container 31 to house the battery module 200, etc. While not illustrated, the housing container 31 and the lid 32 are provided with one or more openings, connection terminals, or the like for connection to external devices, etc.

The battery module 200 includes multiple single batteries 100, a positive electrode side lead 22, a negative electrode side lead 23, and one or more adhesive tapes 24.

The single battery 100 has a structure as shown in FIGS. 1 and 2. At least one of these single batteries 100 is the secondary battery according to the approach. The single batteries 100 are stacked such that their negative electrode terminals 6 and positive electrode terminals 7, each extending to the outside, are aligned to face in the same direction. The single batteries 100 are electrically connected in series as shown in FIG. 7. Note that the single batteries 100 may instead be electrically connected in parallel, or placed in an arrangement that employs a combination of series connections and parallel connections. Parallel connections of the single batteries 100 allow for an increased battery capacity as compared to the case of series connections.

The adhesive tape or tapes 24 fasten the single batteries 100. A heat shrinkable tape may be used instead of the adhesive tape 24 to fix the single batteries 100. In that instance, protective sheets 33 are arranged on the respective sides of the battery module 200, the heat shrinkable tape is wound around them, and the heat shrinkable tape is heated to shrink so that the single batteries are bundled.

The positive electrode side lead 22 has its one end connected to, among the stack of the single batteries 100, the positive electrode terminal 7 of the lowermost single battery 100. The negative electrode side lead 23 has its one end connected to, among the stack of the single batteries 100, the negative electrode terminal 6 of the uppermost single battery 100.

The printed wiring board 34 is disposed along one short side inner surface among the inner surfaces of the housing container 31. The printed wiring board 34 includes a positive electrode side connector 341, a negative electrode side connector 342, a thermistor 343, a protective circuit 344, wirings 345 and 346, an external power distribution terminal 347, a plus side wiring 348a, and a minus side wiring 348b. One major surface of the printed wiring board 34 faces the surface of the battery module 200, where the negative electrode terminals 6 and the positive electrode terminals 7 extend out. A non-illustrated insulating plate is interposed between the printed wiring board 34 and the battery module 200.

The positive electrode side connector 341 has a through-hole. The other end of the positive electrode side lead 22 is inserted into this though-hole so that the positive electrode side connector 341 and the positive electrode side lead 22 are electrically connected to each other. The negative electrode side connector 342 has a through-hole. The other end of the negative electrode side lead 23 is inserted into this though-hole so that the negative electrode side connector 342 and the negative electrode side lead 23 are electrically connected to each other.

The thermistor 343 is fixed to one major surface of the printed wiring board 34. The thermistor 343 detects the temperature of each single battery 100 and sends the detection signal to the protective circuit 344.

The external power distribution terminal 347 is fixed to the other main surface of the printed wiring board 34.

The external power distribution terminal 347 is electrically connected to devices or the like present outside the battery pack 300.

The protective circuit 344 is fixed to said other major surface of the printed wiring board 34. The protective circuit 344 is connected to the external power distribution terminal 347 via the plus side wiring 348a. The protective circuit 344 is connected to the external power distribution terminal 347 also via the minus side wiring 348b. Also, the protective circuit 344 is electrically connected to the positive electrode side connector 341 via the wiring 345. The protective circuit 344 is electrically connected to the negative electrode side connector 342 via the wiring 346. Further, the protective circuit 344 is electrically connected to each of the single batteries 100 via the wirings 35.

The protective sheets 33 are arranged, respectively, on the two long side inner surfaces of the housing container 31 and one short side inner surface of the housing container 31 that faces the printed wiring board 34 via the battery module 200. The protective sheets 33 are each made of, for example, resin or rubber.

The protective circuit 344 regulates the charge and discharge of the single batteries 100. Also, the protective circuit 344 is adapted to cut off the electric connection between the protective circuit 344 and the external power distribution terminal 347 intended for connection to the external devices, based on the detection signal given from the thermistor 343 and/or the detection signal from each single battery 100 or the battery module 200.

Examples of the detection signal sent from the thermistor 343 include a signal indicative of an event of detecting a temperature equal to or higher than a predetermined temperature at the corresponding single battery 100. Examples of the detection signal sent from each single battery 100 or the battery module 200 include a signal indicative of an event of detecting over-charging, over-discharging, and/or over-current in the single batteries 100. For detecting over-charging, etc. in each single battery 100, a battery voltage may be detected, or a potential of the positive electrode or the negative electrode may be detected. In the latter case, a lithium electrode for use as a reference electrode may be inserted into each single battery 100.

Note that the protective circuit 344 may be a circuit included in a device (e.g., an electronic device or an automobile) that uses the battery pack 300 as its power source.

As described above, the battery pack 300 includes the external power distribution terminal 347. Thus, the battery pack 300 can output current from the battery module 200 to external devices and input current from external devices to the battery module 200 via the external power distribution terminal 347. In other words, in the instances of using the battery pack 300 as a power source, current from the battery module 200 is supplied to one or more external devices via the external power distribution terminal 347. In the instances of charging the battery pack 300, charge current from one or more external devices is supplied to the battery pack 300 via the external power distribution terminal 347. In the instances of using the battery pack 300 as an in-vehicle battery, regenerative energy from the motive force of the vehicle can be used in place of the charge current from external devices.

Note that the battery pack 300 may include battery modules 200. In this case, the battery modules 200 may be connected in series or in parallel, or placed in an arrangement that employs a combination of series connections and parallel connections. The printed wiring board 34 and the wirings 35 may be omitted. In this case, the positive electrode side lead 22 and the negative electrode side lead 23 may be used as the external power distribution terminal.

The battery pack as above is applicable to, for example, the uses where excellent cycle performance is required on the occasions of large current extraction. More specifically, the battery pack as above is employed as, for example, a power source for electronic devices, a stationary battery, a built-in or on-board battery for various vehicles, and so on. Examples of the electronic devices include a digital camera. This battery pack is particularly favorably used as an in-vehicle battery.

The battery pack according to this approach includes the secondary battery according to the approach or the battery module according to the approach. Therefore, the battery pack can suppress the resistance increase and also exhibit long-life performance.

(Fifth Approach)

According to a fifth approach, a vehicle is provided. This vehicle carries, as its component, the battery pack according to the approach.

In one example, for the vehicle according to this approach, the battery pack is adapted to collect regenerative energy from the motive force of the vehicle. The vehicle may include a mechanism for converting kinetic energy of the vehicle into regenerative energy.

Examples of the vehicle according to the approach include two- to four-wheeled hybrid electric automobiles, two- to four-wheeled electric automobiles, electric assist bicycles, and railway cars.

In the vehicle according to the approach, where to mount the battery pack is not particularly limited. For example, if the battery pack is mounted on an automobile, the battery pack may be installed in the engine compartment of the automobile, in the rear part of the vehicle body, or under the seats.

The vehicle according to the approach may include the battery packs. In this case, the battery packs may be electrically connected in series or in parallel, or placed in an arrangement that employs a combination of electrical series connections and parallel connections.

Next, an exemplary vehicle according to the approach will be described with reference to the drawings.

FIG. 8 is a sectional view schematically showing an example of the vehicle according to an approach.

As shown in FIG. 8, a vehicle 400 includes a vehicle body 40 and a battery pack 300, which is the battery pack according to the fourth approach. FIG. 8 assumes an example where the vehicle 400 is a four-wheeled automobile.

This vehicle 400 may carry battery packs 300 as its components. In this case, the battery packs 300 may be connected in series or in parallel, or placed in an arrangement that employs a combination of series connections and parallel connections.

In FIG. 8, the battery pack 300 is installed in an engine compartment located in the front part of the vehicle body 40. As mentioned above, the battery pack 300 may be placed in other locations, for example, in the rear part of the vehicle body 40 or under the seats. The battery pack 300 may be used as a power source for the vehicle 400. The battery pack 300 is also capable of collecting regenerative energy from the motive force of the vehicle 400.

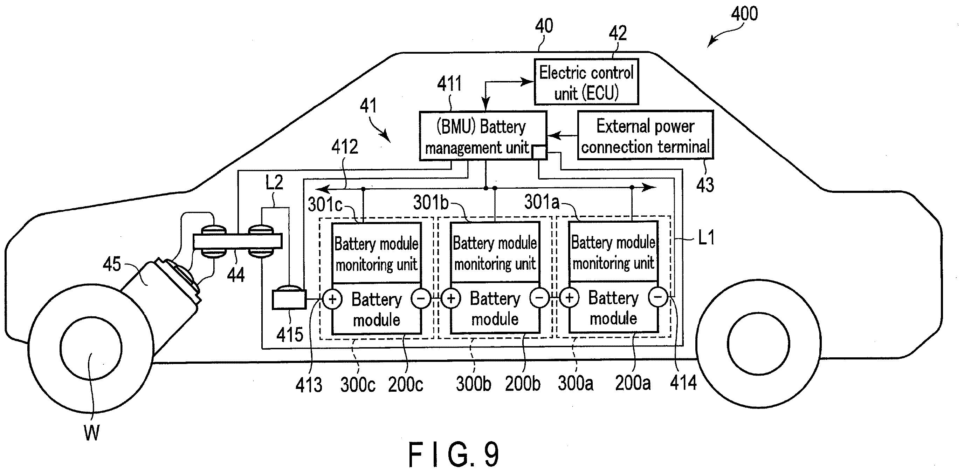

Next, FIG. 9 will be referred to describe how the vehicle according to the approach may be implemented.

FIG. 9 is a diagram schematically showing one example of the vehicle according to the approach. A vehicle 400, shown in FIG. 9, is an electric automobile.

As shown in FIG. 9, the vehicle 400 includes a vehicle body 40, a vehicle power source 41, a vehicle electric control unit (ECU) 42 serving as a master controller for the vehicle power source 41, an external terminal 43 serving as a terminal for connection to an external power supply, an inverter 44, and a drive motor 45.

The vehicle 400 carries the vehicle power source 41 at a position, for example, in the engine compartment, in the rear part of the body, or under the seats. Note that FIG. 9 generally and schematically shows the position of the vehicle power source 41 in the vehicle 400.

The vehicle power source 41 includes multiple (e.g., three) battery packs 300a, 300b, and 300c, a battery management unit (BMU) 411, and a communication bus 412.

The three battery packs 300a, 300b, and 300c are electrically connected in series. The battery pack 300a includes a battery module 200a and a battery module monitoring unit 301a (e.g., a voltage temperature monitor (VTM)). The battery pack 300b includes a battery module 200b and a battery module monitoring unit 301b. The battery pack 300c includes a battery module 200c and a battery module monitoring unit 301c. The battery packs 300a, 300b, and 300c are adapted so that each of them can be independently detached for replacement with another battery pack 300.

The battery modules 200a to 200c each include multiple single batteries connected in series. At least one of these single batteries is the secondary battery according to the second approach. Each of the battery modules 200a to 200c undergoes charge and discharge operations via the positive electrode terminal 413 and the negative electrode terminal 414.

The battery management unit 411 communicates with the battery module monitoring units 301a to 301c to acquire information about voltages, temperatures, etc. of the single batteries 100 included in the battery modules 200a to 200c in the vehicle power source 41, in order to gather information for the maintenance of the vehicle power source 41.

The communication bus 412 is connected between the battery management unit 411 and each of the battery module monitoring units 301a to 301c. The communication bus 412 is constituted such that multiple nodes (i.e., the battery management unit and one or more battery module monitoring units) share a set of communication lines. The communication bus 412 may be, for example, a communication bus configured according to the control area network (CAN) standard.

The battery module monitoring units 301a to 301c measure the voltage and temperature of individual single batteries constituting the battery modules 200a to 200c according to a command communicated from the battery management unit 411. Note that the temperature measurement may be conducted at only a few points per battery module, and not every cell unit needs to be subjected to the temperature measurement.

The vehicle power source 41 may optionally include an electromagnetic contactor, e.g., a switch unit 415 shown in FIG. 9, for switching on/off the connection between the positive electrode terminal 413 and the negative electrode terminal 414. Such a switch unit 415 includes a non-illustrated precharge switch which is turned on when the battery modules 200a to 200c are charged and a non-illustrated main switch which is turned on when the battery output is supplied to a load. The precharge switch and the main switch include a non-illustrated relay circuit which is turned on or off by a signal provided to a coil disposed near the switch element.

The inverter 44 converts an input direct current voltage to a three-phase alternate-current (AC) high voltage for driving a motor. Three-phase output terminals of the inverter 44 are connected to the three-phase input terminals of the drive motor 45. The inverter 44 controls the output voltage according to control signals from the battery management unit 411, or from the vehicle ECU 42 to control all of the vehicle operations.

The drive motor 45 is rotated by the electric power supplied from the inverter 44. The rotation is transmitted to, for example, an axle shaft and driving wheels W via a differential gear unit.

While not illustrated, the vehicle 400 also includes a regenerative brake mechanism. The regenerative brake mechanism rotates the drive motor 45 in response to a braking operation on the vehicle 400 and converts kinetic energy into regenerative energy which is in the form of electric energy. The regenerative energy collected by the regenerative brake mechanism is input to the inverter 44 and converted into a direct current. The direct current is then input to the vehicle power source 41.

A connecting line L1 is provided, with its one end connected to the negative electrode terminal 414 of the vehicle power source 41 via a current detector (not illustrated) within the battery management unit 411. The other end of the connecting line L1 is connected to a negative electrode input terminal of the inverter 44.

A connecting line L2 is provided, with its one end connected to the positive electrode terminal 413 of the vehicle power source 41 via the switch unit 415. The other end of the connecting line L2 is connected to a positive electrode input terminal of the inverter 44.

The external terminal 43 is connected to the battery management unit 411. The external terminal 43 is adapted for connection to, for example, an external power source.

The vehicle ECU 42 conducts total management of the vehicle by controlling the battery management unit 411 in cooperation with other units in response to operational inputs from a driver, etc. Data is transferred between the battery management unit 411 and the vehicle ECU 42 via a communication line, and such data includes data for the maintenance of the vehicle power source 41 such as the remaining capacity of the vehicle power source 41.

The vehicle according to this approach includes one or more battery packs according to the approach. Therefore, according to this approach, a vehicle with battery packs capable of exhibiting low-resistance and long-life performance can be realized.

Examples

Examples will be described. Note that the approaches are not limited to these examples. Results of each test will be set forth in tables.

(Example 1)

<Preparation of Electrodes>

For a positive electrode, 90 wt% of $LiMn_2O_4$ powder, 5 wt% of acetylene black, and 5 wt% of polyvinylidene fluoride (PVdF) were added in N-methyl pyrrolidone (NMP) and mixed to prepare slurry. The slurry was applied to a 20 $\mu$m-thickness aluminum foil in an amount of 100 $g/m^2$, and the resultant was dried on a hot plate at 120 °C to remove the solvent. The other surface was similarly processed so that a double-side coated positive electrode was prepared. A roll pressing operation was conducted to set the electrode density at 2.5 g/cc.

For a negative electrode, 87 wt% of $Ti_2NbO_7$ (monoclinic niobium-titanium composite oxide) particles having an average particle size of 3.0 $\mu$m, 4 wt% of acetylene black (AB), 4 wt% of multi-walled carbon nanotubes (MWCNT), and 5 wt% of PVdF were added in N-methyl pyrrolidone (NMP) and mixed to prepare slurry. The $Ti_2NbO_7$ particles were white-color insulating particles. The multi-walled carbon nanotubes had an average fiber diameter of 10 $\mu$m and an average fiber length of 25 $\mu$m. The dispersion for the negative electrode was conducted by mixing 1 mm-diameter glass beads in an amount equivalent to 50 wt% of the active material, and mixing the slurry having a solid content concentration of 60 % by a planetary centrifugal mixer at 2000 rpm for 10 minutes. After the mixing, the glass beads were removed from the slurry by a 100-mesh filter. The slurry was applied to a 20 $\mu$m-thickness aluminum foil in an amount of 100 $g/m^2$, and the resultant was dried on a hot plate at 120 °C to remove the solvent. The other surface was similarly processed so that a double-side coated negative electrode was prepared. A roll pressing operation was conducted to set the electrode density at 2.0 g/cc.

<Preparation of Laminate Cell>

The positive electrode, a separator made of a 25 $\mu$m thickness polyethylene porous film, the negative electrode, and another separator were stacked in this order and wound in a spiral. The resultant was subjected to a heat pressing process at 90 °C so that an electrode group having a flat profile of a 30 mm width and a 3.0 mm thickness was prepared. The obtained electrode group was placed in a pack made of a laminate film, and subjected to a vacuum drying process at 80 °C for 24 hours. The laminate film was constituted by a 40 $\mu$m thickness aluminum foil and polypropylene layers formed on the respective surfaces of the aluminum foil, and had a total thickness of 0.1 mm. A liquid nonaqueous electrolyte was poured into the laminate film pack in which the electrode group was placed. The pack was subsequently subjected to a heat sealing process to be completely sealed, and a nonaqueous electrolyte battery having a width of 35 mm, a thickness of 3.2 mm, a height of 65 mm, and a capacity of 2 Ah was thereby prepared.

(Example 2)

A nonaqueous electrolyte battery was prepared in the same manner as in Example 1 except that the dispersion time was set to 20 minutes in the preparation of the negative electrode slurry.

(Example 3)

A nonaqueous electrolyte battery was prepared in the same manner as in Example 1 except that a bead mill was used instead of a planetary centrifugal mixer in the preparation of the negative electrode slurry. Here, the dispersion medium in the bead mill was 1 mm diameter zirconia beads. Liquid feeding was conducted so that the residence time, i.e., the stirring time, at 2000 rpm lasted 5 minutes.

(Example 4)

Instead of PVdF, 2.5 wt% of CMC and 2.5 wt% of SBR were used together as the binder in the negative electrode. As such, a nonaqueous electrolyte battery was prepared in the same manner as in Example 1 except that the mixture ratio of the active material, the conductive agent components, and the binder components, namely, $Ti_2NbO_7$: AB: MWCNT: CMC: SBR, was set to 87: 4: 4: 2.5: 2.5.

(Example 5)

A nonaqueous electrolyte battery was prepared in the same manner as in Example 1 except that MWCNT in the form of powder was not used but a dispersion liquid in which MWCNT was already dispersed in NMP by a wet-type high-pressure jet mill was used. In Table 1 below, the value of the MWCNT dispersion liquid in the electrode composition is based on a solid content conversion amount.

(Example 6)

The composition of the negative electrode was set to 83 wt% of $Ti_2NbO_7$ particles, 4 wt% of acetylene black (AB), 8 wt% of multi-walled carbon nanotubes (MWCNT), and 5 wt% of PVdF. Also, a bead mill was used for the dispersion of the negative electrode slurry. Except for these points, a nonaqueous electrolyte battery was prepared in the same manner as in Example 1. The dispersion medium in the bead mill was 1 mm-diameter zirconia beads. Also, liquid feeding was conducted so that the residence time, i.e., the stirring time, at 3000 rpm lasted 5 minutes.

(Example 7)

A nonaqueous electrolyte battery was prepared in the same manner as in Example 1 except that $Ti_2NbO_7$ particles having an average particle size of 5.0 $\mu$m were used.

(Example 8)

A nonaqueous electrolyte battery was prepared in the same manner as in Example 1 except that $Li_2Na_2Ti_6O_{14}$ (orthorhombic titanium-containing composite oxide) particles having an average particle size of 3.0 $\mu$m were used for the negative electrode. The $Li_2Na_2Ti_6O_{14}$ particles were white-color insulating particles.

(Comparative Example 1)

A nonaqueous electrolyte battery was prepared in the same manner as in Example 1 except that the dispersion time was set to 1 minute in the preparation of the negative electrode slurry.

(Comparative Example 2)

A nonaqueous electrolyte battery was prepared in the same manner as in Example 1 except that glass beads were not added in the preparation of the negative electrode slurry.

(Comparative Example 3)

Instead of PVdF, 5.0 wt% of CMC was used as the binder in the negative electrode. As such, the mixture ratio of the active material, the conductive agent components, and the binder component, namely, $Ti_2NbO_7$: AB: MWCNT: CMC, was set to 87: 4: 4: 5. Also, the rotation number for the bead mill dispersion was set to 3000 rpm. Except for these points, a nonaqueous electrolyte battery was prepared in the same manner as in Example 3.

(Comparative Example 4)

A nonaqueous electrolyte battery was prepared in the same manner as in Example 4 except that glass beads were not added in the dispersion by the planetary centrifugal mixer.

(Comparative Example 5)

A nonaqueous electrolyte battery was prepared in the same manner as in Example 1 except that $Ti_2NbO_7$ particles having an average particle size of 7.0 $\mu$m were used.

(Comparative Example 6)

A nonaqueous electrolyte battery was prepared in the same manner as in Example 8 except that glass beads were not added in the preparation of the negative electrode slurry.

For each of the examples and the comparative examples, a lightness $L^*$ of the electrode and a particle size distribution of the mixture layer were measured by the method explained below. The results will be set forth in Tables 1 to 3.

<Measurement of $L^*$ Value of Negative Electrode>

The method described above was employed to measure the lightness $L^*$ of each negative electrode.

<Measurement of Particle Size Distribution of Mixture Layer>

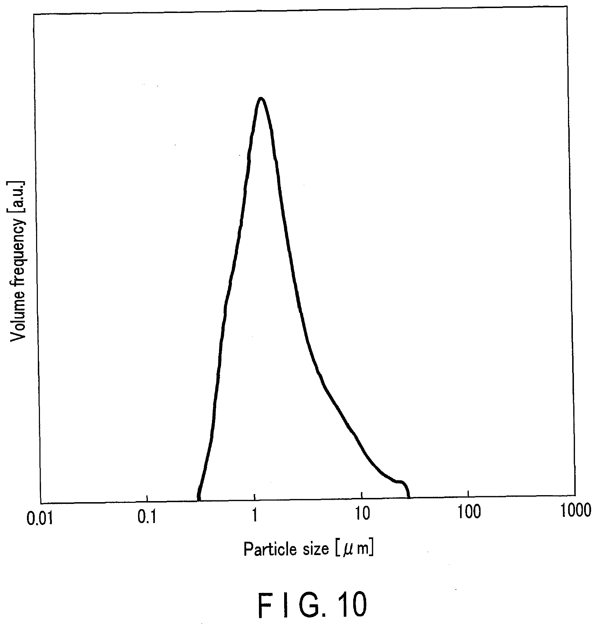

Each electrode was cut out to be 2 cm square, that is, into a piece having an area of 2 cm $\times$ 2 cm on each side surface perpendicular to the thickness direction of the electrode, immersed in 10 cc of NMP solution, and subjected to ultrasound application for approximately 10 minutes. Subsequently, a current collecting foil was removed and a solution of the dissolved mixture layer was stirred at 2000 rpm for 30 seconds using a planetary centrifugal mixer. Immediately thereafter, particle size distribution measurement for the solution was conducted using a laser diffraction/scattering particle size distribution measurement device. The acquired profiles were analyzed in a reflection mode so as to obtain the particle sizes at the respective volume cumulative frequencies d10, d20, d30, d40, d50, d60, d70, d80, and d90. The volume frequency particle size distribution of the mixture layer of Example 1 is shown in FIG. 10. In FIG. 10, the horizontal axis indicates a particle size [$\mu$m], and the vertical axis indicates a volume frequency [a.u.] (any unit). The mixture layer of Example 1 showed a particle size of 0.60 $\mu$m at the volume cumulative frequency d10, a particle size of 0.77 $\mu$m at d20, a particle size of 0.96 $\mu$m at d30, a particle size of 1.18 $\mu$m at d40, a particle size of 1.44 $\mu$m at d50, a particle size of 1.79 $\mu$m at d60, a particle size of 2.27 $\mu$m at d70, a particle size of 3.03 $\mu$m at d80, and a particle size of 4.57 $\mu$m at d90. Tables 1 to 3 set forth the particle size at the volume cumulative frequency d50 of the mixture layer of each of the examples and the comparative examples. Note that, in Tables 1 to 3, the parenthesized values in the column for compositions of the active materials are average sizes (D50) of the active material particles in the respective examples and comparative examples.

<Calculation with Relational Expression, [Electrode lightness] to [Sum of Reciprocals of Particle Sizes at Respective Volume Cumulative Frequencies]

The description will assume that the particle sizes at the volume cumulative frequencies d10, d20, d30, d40, d50, d60, d70, d80, and d90 in the particle size distribution of the mixture layer are referred to as r1, r2, r3, r4, r5, r6, r7, r8, and r9, respectively. Here, the value of the following relational expression (2) is obtained for each case based on the lightness $L^*$ of the electrode surface and the value of $r_i$, where i is a natural number from 1 to 9, and the results are set forth in Tables 1 to 3.

$$(100 - L*)/\sum_{1}^{9}\frac{1}{r_i}di \qquad (2)$$

For each of the examples and the comparative examples, the capacity retention ratio and the resistance increase ratio upon charge and discharge cycles of the battery were measured by the following methods. The results are set forth in Tables 1 to 3. Note that Tables 1 to 3 show the mixture ratio for each electrode composition in the unit of wt%.

\<Charge and Discharge Test\>

Charging was conducted using a current value of 2 A with a stop condition of a maximum voltage of 2.85 V and an elapse of a charging time of 3 hours, and thereafter discharging was conducted at 2 A until 1.6 V was reached. This cycle was repeated 100 times at 60 °C and the capacity retention ratio upon the cycles was measured. Also, the increase ratio of the resistance value was estimated from the discharge tests using 1 C to 10 C constant current pulses, performed before and after the cycle test.

Table 1

| Table 1 | Negative Electrode | | | $L^*$ of negative electrode surface | Particle size distribution d50 ($\mu$m) | Relational expression $(100 - L*)\Big/\sum_1^9 \frac{1}{r_i} di$ | Capacity retention ratio (%) | Resistance increase ratio (%) |
|---|---|---|---|---|---|---|---|---|
| | Active material (average particle size) | Electrode composition | Dispersion step/condition | | | | | |
| Ex. 1 | $Ti_2NbO_7$ (3.0$\mu$m) | $Ti_2NbO_7$: AB: MWCNT: PVdF = 87: 4: 4: 5 | Planetary centrifugal mixer / 2000rpm / dispersion time: 10min / addition of 1mm-diameter glass beads | 39.5 | 1.44 | 8.52 | 91.0 | 12.2 |
| Ex. 2 | $Ti_2NbO_7$ (3.0$\mu$m) | $Ti_2NbO_7$: AB: MWCNT: PVdF = 87: 4: 4: 5 | Planetary centrifugal mixer / 2000rpm / dispersion time: 20min / addition of 1mm-diameter glass beads | 39.3 | 1.43 | 8.39 | 92.0 | 12.1 |
| Ex. 3 | $Ti_2NbO_7$ (3.0$\mu$m) | $Ti_2NbO_7$: AB: MWCNT: PVdF = 87: 4: 4: 5 | Bead mill / 2000rpm / residence time: 5min / addition of 1mm-diameter zirconia beads | 40.5 | 1.28 | 7.72 | 92.1 | 12.5 |
| Ex. 4 | $Ti_2NbO_7$ (3.0$\mu$m) | $Ti_2NbO_7$: AB: MWCNT: CMC: SBR = 87: 4: 4: 2.5: 2.5 | Planetary centrifugal mixer / 2000rpm / dispersion time: 10min /addition of 1mm-diameter glass beads | 39.8 | 1.46 | 8.65 | 94.5 | 8.1 |
| Ex. 5 | $Ti_2NbO_7$ (3.0$\mu$m) | $Ti_2NbO_7$: AB: MWCNT (dispersion liquid): PVdF = 87: 4: 4: 5 | Planetary centrifugal mixer / 2000rpm / dispersion time: 10min / addition of 1mm-diameter glass beads | 38.6 | 1.44 | 8.63 | 92.5 | 10.8 |

Table 1

| Table 2 | Negative Electrode | | | $L^*$ of negative electrode surface | Particle size distribution d50 ($\mu$m) | Relational expression 9 $(100 - L*)\big/\sum_{1}^{9}\frac{1}{r_i}di$ | Capacity retention ratio (%) | Resistance increase ratio (%) |
|---|---|---|---|---|---|---|---|---|
| | Active material (average particle size) | Electrode composition | Dispersion step/condition | | | | | |
| Ex. 6 | $Ti_2NbO_7$ (3.0$\mu$m) | $Ti_2NbO_7$: AB: MWCNT: PVdF = 83: 4: 8: 5 | Bead mill / 3000rpm / residence time: 5min / addition of 1mm-diameter zirconia beads | 37.3 | 1.10 | 7.05 | 93.8 | 12.5 |
| Ex. 7 | $Ti_2NbO_7$ (5.0$\mu$m) | $Ti_2NbO_7$: AB: MWCNT: PVdF = 87: 4: 4: 5 | Planetary centrifugal mixer / 2000rpm / dispersion time: 10min / addition of 1mm-diameter glass beads | 35.4 | 2.20 | 10.89 | 88.5 | 11.4 |
| Ex. 8 | $Li_2Na_2Ti_6O_{14}$ (3.0$\mu$m) | $Ti_2NbO_7$: AB: MWCNT: PVdF = 87: 4: 4: 5 | Planetary centrifugal mixer / 2000rpm / dispersion time: 10min / addition of 1mm-diameter glass beads | 38.2 | 1.40 | 9.98 | 89.5 | 12.0 |
| Comp. Ex. 1 | $Ti_2NbO_7$ (3.0$\mu$m) | $Ti_2NbO_7$: AB: MWCNT: PVdF = 87: 4: 4: 5 | Planetary centrifugal mixer / 2000rpm / dispersion time: 1min / addition of 1mm-diameter glass beads | 62.0 | 1.66 | 6.69 | 76.2 | 25.8 |
| Comp. Ex. 2 | $Ti_2NbO_7$ (3.0$\mu$m) | $Ti_2NbO_7$: AB: MWCNT: PVdF = 87: 4: 4: 5 | Planetary centrifugal mixer / 2000rpm / dispersion time: 10min | 67.8 | 1.56 | 5.10 | 76.2 | 18.8 |

Table 1

EP 4 250 391 A1

| Table 3 | Negative Electrode | | | L* of negative electrode surface | Particle size distribution d50 ($\mu$m) | Relational expression $(100 - L*)\big/\sum_{1}^{9}\frac{1}{r_i}di$ | Capacity retention ratio (%) | Resistance increase ratio (%) |
|---|---|---|---|---|---|---|---|---|
| | Active material (average particle size) | Electrode composition | Dispersion step/condition | | | | | |
| Comp. Ex. 3 | $Ti_2NbO_7$ (3.0$\mu$m) | $Ti_2NbO_7$: AB: MWCNT: CMC = 87: 4: 4: 5 | Bead mill / 3000rpm / residence time: 5min / addition of 1mm-diameter zirconia beads | 42.3 | 1.10 | 6.50 | 84.8 | 37.8 |
| Comp. Ex. 4 | $Ti_2NbO_7$ (3.0$\mu$m) | $Ti_2NbO_7$: AB: MWCNT: CMC: SBR = 87: 4: 4: 2.5: 2.5 | Planetary centrifugal mixer / 2000rpm / dispersion time: 10min | 64.4 | 1.78 | 6.20 | 81.0 | 20.5 |
| Comp. Ex. 5 | $Ti_2NbO_7$ (7.0$\mu$m) | $Ti_2NbO_7$: AB: MWCNT: PVdF = 87: 4: 4: 5 | Planetary centrifugal mixer / 2000rpm / dispersion time: 10min / addition of 1mm-diameter glass beads | 34.2 | 6.80 | 24.27 | 82.8 | 37.8 |
| Comp. Ex. 6 | $Li_2Na_2Ti_6O_{14}$ (3.0$\mu$m) | $Ti_2NbO_7$: AB: MWCNT: PVdF = 87: 4: 4: 5 | Planetary centrifugal mixer / 2000rpm / dispersion time: 10min | 68.5 | 1.90 | 5.62 | 74.6 | 27.9 |

As evidently understood from Tables 1 to 3, the electrodes of Examples 1 to 8 each exhibited a low resistance increase ratio and a high capacity retention ratio accompanying the charge and discharge cycles, as compared to the electrodes of Comparative Examples 1 to 6. Since Examples 1 to 8 adopted appropriate stirring conditions for their negative electrode slurry, the aggregates of carbon nanotubes serving as a conductive agent were loosened and their values of the relational expression (2) fell in the range of from 7.0 to 11.0.

In Comparative Example 1, the stirring time was insufficient. Consequently, carbon nanotubes serving as a conductive agent remained aggregated and resulted in a high lightness L* of the negative electrode surface. As such, the value of the relational expression (2) was less than 7.0.

Comparative Example 2 did not use glass beads in the stirring. Consequently, carbon nanotubes serving as a conductive agent remained aggregated and resulted in a high lightness L* of the negative electrode surface. As such, the value of the relational expression (2) was less than 7.0.

In Comparative Example 3, the mixture layer had a small particle size. Thus, the value of the relational expression (2) was less than 7.0.

Comparative Example 4 did not use glass beads in the stirring. Consequently, carbon nanotubes serving as a conductive agent remained aggregated and resulted in a high lightness L* of the negative electrode surface. As such, the value of the relational expression (2) was less than 7.0.

In Comparative Example 5, the mixture layer had a large particle size. Thus, the value of the relational expression (2) was greater than 11.0.

Comparative Example 6 did not use glass beads in the stirring. Consequently, carbon nanotubes serving as a conductive agent remained aggregated and resulted in a high lightness L* of the negative electrode surface. As such, the value of the relational expression (2) was less than 7.0.

According to at least one approach described above, an electrode which includes a mixture layer containing a titanium-containing oxide and a conductive agent, and of which the relational expression, namely, [100 - electrode lightness L*] to [the sum of reciprocals of particle sizes at the respective volume cumulative frequencies], satisfies a specific range is provided. With this electrode, suppression of resistance increase and enhancement of life performance can be realized.

The present disclosure also encompasses the following approaches of an electrode, a secondary battery, a battery pack and a vehicle:

1. An electrode (3 or 5) comprising a mixture layer (3b or 5b), the mixture layer (3b or 5b) comprising a titanium-containing oxide and a conductive agent, the electrode (3 or 5) satisfying following expression (1)

$$7.0 \leq (100 - L*) / \sum_{i}^{9} \frac{1}{r_i} di \leq 11.0 \qquad (1)$$

wherein

L* is a lightness of the electrode (3 or 5) according to JISZ8722:2009, and
$r_i$ is a particle size for the mixture layer (3b or 5b) at a volume cumulative frequency dx, where i is a natural number from 1 to 9,
the volume cumulative frequency dx being a volume-based cumulative frequency for which accumulation starts with a smaller particle size, and
the volume cumulative frequency dx taking a value from 10%, denoted as d10, up to 90%, denoted as d90, in increments of 10%.

2. The electrode (3 or 5) according to clause 1, wherein the lightness L* satisfies $35.0 \leq L* \leq 50.0$.

3. The electrode (3 or 5) according to any one of clauses 1 to 2, wherein the titanium-containing oxide comprises white-color insulating particles.

4. The electrode (3 or 5) according to any one of clauses 1 to 3, wherein the titanium-containing oxide comprises at least one of a monoclinic niobium-titanium composite oxide or an orthorhombic titanium-containing composite oxide.

5. The electrode (3 or 5) according to any one of clauses 1 to 3, wherein the titanium-containing oxide comprises at least one of

a compound represented by $Li_xTi_{1-y}M3_{y+z}Nb_{2-z}O_{7-\delta}$, wherein M3 is at least one selected from the group consisting of Mg, Fe, Ni, Co, W, Ta, and Mo, and wherein $0 \leq x < 5$, $0 \leq y < 1$, $0 \leq z < 2$, and $-0.3 \leq \delta \leq 0.3$, or a compound represented by $Li_{2+a}M(I)_{2-b}Ti_{6-c}M(II)_dO_{14+\sigma}$, wherein M(I) is at least one selected from the group consisting of Sr, Ba, Ca, Mg, Na, Cs, Rb, and K, and M(II) is at least one selected from the group consisting of Zr, Sn, V, Nb, Ta, Mo, W, Y, Fe, Co, Cr, Mn, Ni, and Al, and wherein $0 \leq a \leq 6$, $0 \leq b < 2$, $0 \leq c < 6$, $0 \leq d < 6$, and $-0.5 \leq \sigma \leq 0.5$.

6. The electrode (3 or 5) according to any one of clauses 1 to 5, wherein the conductive agent comprises at least one of single-walled carbon nanotubes or multi-walled carbon nanotubes.

7. The electrode (3 or 5) according to any one of clauses 1 to 6, which is a negative electrode (3).

8. A secondary battery (100) comprising a positive electrode (5), a negative electrode (3), and an electrolyte, wherein the positive electrode (5) or the negative electrode (3) is the electrode according to any one of clauses 1 to 7.

9. A battery pack (300, 300a, 300b,or 300c) comprising the secondary battery (100) according to clause 8.

10. The battery pack (300, 300a, 300b,or 300c) according to clause 9, further comprising an external power distribution terminal (347) and a protective circuit (344).

11. The battery pack (300, 300a, 300b,or 300c) according to any one of clauses 9 to 10, wherein

the secondary battery (100) is more than one, and
said more than one secondary battery (100) is connected in series or in parallel, or in a combination of in-series and in-parallel.

12. A vehicle comprising the battery pack (300, 300a, 300b,or 300c) according to any one of clauses 9 to 11.

13. The vehicle according to clause 12, comprising a mechanism configured to convert kinetic energy of the vehicle into regenerative energy.

While certain approaches have been described, these approaches have been presented by way of example only, and are not intended to limit the scope of the claims. Indeed, the approaches described herein may be embodied in a variety of other forms; furthermore, various omissions, substitutions and changes in the form of the approaches described herein may be made.

**Claims**

1. An electrode (3 or 5) comprising a mixture layer (3b or 5b), the mixture layer (3b or 5b) comprising a titanium-containing oxide and a conductive agent, the electrode (3 or 5) satisfying following expression (1)

$$7.0 \leq (100 - L*) / \sum_i^9 \frac{1}{r_i} di \leq 11.0 \qquad (1)$$

wherein

$L^*$ is a lightness of the electrode (3 or 5) according to JISZ8722:2009, and
$r_i$ is a particle size for the mixture layer (3b or 5b) at a volume cumulative frequency dx, where i is a natural number from 1 to 9,
the volume cumulative frequency dx being a volume-based cumulative frequency for which accumulation starts with a smaller particle size, and
the volume cumulative frequency dx taking a value from 10%, denoted as d10, up to 90%, denoted as d90, in increments of 10%.

2. The electrode (3 or 5) according to claim 1, wherein the lightness L* satisfies $35.0 \leq L^* \leq 50.0$.

3. The electrode (3 or 5) according to any one of claims 1 to 2, wherein the titanium-containing oxide comprises white-color insulating particles.

4. The electrode (3 or 5) according to any one of claims 1 to 3, wherein the titanium-containing oxide comprises at least one of a monoclinic niobium-titanium composite oxide or an orthorhombic titanium-containing composite oxide.

5. The electrode (3 or 5) according to any one of claims 1 to 3, wherein the titanium-containing oxide comprises at least one of

a compound represented by $Li_xTi_{1-y}M3_{y+z}Nb_{2-z}O_{7-\delta}$, wherein M3 is at least one selected from the group consisting of Mg, Fe, Ni, Co, W, Ta, and Mo, and wherein $0 \leq x < 5$, $0 \leq y < 1$, $0 \leq z < 2$, and $-0.3 \leq \delta \leq 0.3$, or
a compound represented by $Li_{2+a}M(I)_{2-b}Ti_{6-c}M(II)_dO_{14+\sigma}$, wherein M(I) is at least one selected from the group consisting of Sr, Ba, Ca, Mg, Na, Cs, Rb, and K, and M(II) is at least one selected from the group consisting of Zr, Sn, V, Nb, Ta, Mo, W, Y, Fe, Co, Cr, Mn, Ni, and Al, and wherein $0 \leq a \leq 6$, $0 \leq b < 2$, $0 \leq c < 6$, $0 \leq d < 6$, and $-0.5 \leq \sigma \leq 0.5$.

6. The electrode (3 or 5) according to any one of claims 1 to 5, wherein the conductive agent comprises at least one of single-walled carbon nanotubes or multi-walled carbon nanotubes.

7. The electrode (3 or 5) according to any one of claims 1 to 6, which is a negative electrode (3).

8. A secondary battery (100) comprising a positive electrode (5), a negative electrode (3), and an electrolyte, wherein the positive electrode (5) or the negative electrode (3) is the electrode according to any one of claims 1 to 7.

9. A battery pack (300, 300a, 300b, or 300c) comprising the secondary battery (100) according to claim 8.

10. The battery pack (300, 300a, 300b, or 300c) according to claim 9, further comprising an external power distribution terminal (347) and a protective circuit (344).

11. The battery pack (300, 300a, 300b, or 300c) according to any one of claims 9 to 10, wherein

the secondary battery (100) is more than one, and
said more than one secondary battery (100) is connected in series or in parallel, or in a combination of in-series and in-parallel.

12. A vehicle comprising the battery pack (300, 300a, 300b,or 300c) according to any one of claims 9 to 11.

13. The vehicle according to claim 12, comprising a mechanism configured to convert kinetic energy of the vehicle into regenerative energy.

FIG. 1

FIG. 2

FIG. 3

FIG. 4

F I G. 5

F I G. 6

F I G. 7

F I G. 8

F I G. 9

Particle size [$\mu$ m]

F I G. 10

Europäisches
Patentamt

European
Patent Office

Office européen
des brevets

# EUROPEAN SEARCH REPORT

**Application Number**

**EP 22 19 1678**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "A Basic Guide to Particle Characterization", Malvern Instruments Worldwide – White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf [retrieved on 2023-08-14] * page 14 * ----- | 1 | INV. H01M4/131 H01M4/485 H01M4/48 H01M4/62 H01M50/209 ADD. H01M4/02 |
| X | JP 6 571284 B2 (TOSHIBA CORPORATION) 4 September 2019 (2019-09-04) * paragraphs [0003], [0039], [0125], [0132], [0148] – [0149] * ----- | 1-13 | |
| X | WU KAIQIANG ET AL: "Enhanced electrochemical performance of sodium lithium titanate by coating various carbons", JOURNAL OF POWER SOURCES, ELSEVIER, AMSTERDAM, NL, vol. 272, 2 September 2014 (2014-09-02), pages 283-290, XP029048983, ISSN: 0378-7753, DOI: 10.1016/J.JPOWSOUR.2014.08.088 * 2.Experimental 3.Results and discussion * ----- | 1-8 | TECHNICAL FIELDS SEARCHED (IPC) H01M |

The present search report has been drawn up for all claims

| Place of search | Date of completion of the search | Examiner |
|---|---|---|
| Munich | 16 August 2023 | Letilly, Marika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 22 19 1678

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2023

| Patent document cited in search report | | Publication date | Patent family member(s) | | Publication date |
|---|---|---|---|---|---|
| JP 6571284 | B2 | 04-09-2019 | JP | 6571284 B2 | 04-09-2019 |
| | | | JP | WO2018020668 A1 | 07-03-2019 |
| | | | WO | 2018020668 A1 | 01-02-2018 |

EPO FORM P0459